(19) Europäisches Patentamt
European Patent Office
Office européen des brevets

(11) **EP 1 870 694 B1**

(12) **EUROPÄISCHE PATENTSCHRIFT**

(45) Veröffentlichungstag und Bekanntmachung des Hinweises auf die Patenterteilung:
**05.03.2014  Patentblatt 2014/10**

(51) Int Cl.:
***G01N 17/00*** *(2006.01)*

(21) Anmeldenummer: **07009750.6**

(22) Anmeldetag: **16.05.2007**

(54) **Verfahren zur Bestimmung der Schädigung der Elektrotauchlackschicht eines füllerlosen Automobillacks durch Lichteinwirkung**

Method for determining damage of an electro-dip paint layer of a fillerless car paint with a light test

Procédé destiné à la détermination de la détérioration de la couche d'électrovernissage pour automobile sans remplissage sous l'effet de la lumière

(84) Benannte Vertragsstaaten:
**DE FR GB IT**

(30) Priorität: **21.06.2006  DE 102006028442**

(43) Veröffentlichungstag der Anmeldung:
**26.12.2007  Patentblatt 2007/52**

(73) Patentinhaber: **Bayerische Motoren Werke Aktiengesellschaft**
**80809 München (DE)**

(72) Erfinder: **Noemayr, Richard, Dr.**
**81241 München (DE)**

(56) Entgegenhaltungen:
**DE-A1- 10 337 877        US-A- 5 389 219**
**US-A1- 2004 155 189        US-B1- 6 552 787**

**Beschreibung**

Die Erfindung bezieht sich auf ein Verfahren zur Bestimmung der zur Delamination führenden Schädigung der Elektrotauchlackschicht eines füllerlosen Automobillacks durch Lichteinwirkung.

Die füllerlose Lackierung gewinnt in der Automobilindustrie zunehmend Interesse. Durch den Entfall und somit die Nacharbeit der Füllerschicht sind erhebliche Einsparungen erzielbar. Neben einer Reduzierung der Investitionskosten ergeben sich Materialeinsparungen und Durchlaufzeitenverkürzungen, die zu einem höheren Durchsatz in der Lackierlinie führen.

Aufgrund der reduzierten Schichtdicke der füllerlosen Lackierung wird jedoch die Elektrotauchlackschicht stärker durch die kurzwelligen Anteile des Sonnenlichtes belastet und geschädigt. Dies hat zur Folge, dass der darüberliegende Decklack die Haftung auf der Tauchlackschicht verliert und delaminiert.

Das Risiko der Schädigung des Elektrotauchlacks durch Lichteinwirkung wird von den Lackherstellern unterschiedlich bewertet. Dies führt zu unterschiedlichen Vorschlägen für die relevanten Grenzwerte der Lichteinwirkung auf die Elektrotauchlackschicht des Automobillacks und damit unterschiedlichen Grenzwerten für die Dicke des Decklacks.

Der Decklack besteht im Allgemeinen aus mindestens einer Basislackschicht und einer Klarlackschicht. Aufgrund der geringen Langzeiterfahrung mit dieser Technik werden mögliche Risiken der Delamination meist dadurch minimiert, dass relativ dicke Basislackschichten appliziert werden. Dies kann zu Problemen bei der Applikation führen, beispielsweise zu Kochern oder Läufern. Auch sind Materialeinsparungen kaum möglich, da die untere Grenze der Schichtdicke des Decklacks, bei der eine zur Delamination führende Schädigung der Elektrotauchlackschicht durch Lichteinwirkung während der Lebensdauer des Automobils sicher ausgeschlossen werden kann, nicht zuverlässig ermittelbar ist.

Zudem gibt es zahlreiche andere Fälle, bei denen es von Interesse ist, festzustellen, ob eine Delamination des Decklacks auf eine Schädigung des Elektrotauchlacks durch Lichteinwirkung zurückzuführen ist oder nicht. Dies ist beispielsweise bei Reklamationen von Bedeutung. So ist für eine Delamination des Decklacks, die durch Lichteinwirkung hervorgerufen wird, normalerweise der Automobilhersteller verantwortlich, während eine Delamination des Decklacks durch andere Ursachen, beispielsweise durch Kontakt mit Lösungsmitteln, die nach Diffusion in den Decklack die Haftung zwischen Decklack und Elektrotauchlack lösen, der Kunde zu verantworten hat.

Die Patentanmeldung US 2004/155189 A1 offenbart ein Verfahren zur Bestimmung der zur Delamination führenden Schädigung der Elektrotauchlackschicht eines füllerlosen Automobillacks durch Lichteinwirkung, in dem bei Lichteinwirkung gebildete Referenz-Zersetzungsprodukte ermittelt werden und anhand der Konzentration der Referenz-Zersetzungsprodukte das Ausmaß der durch die Lichteinwirkung hervorgerufenen Schädigung der Elektrotauchlackschicht bestimmt wird, wobei die Konzentration der Referenz-Zersetzungsprodukte durch Infrarot-Spektroskopie bestimmt wird.

Aufgabe der Erfindung ist es daher, ein Verfahren bereitzustellen, mit dem bei einem füllerlosen Automobillack zuverlässig ermittelt werden kann, ob die Ursache für eine Delamination des Decklacks eine durch Lichteinwirkung hervorgerufene Schädigung des Elektrotauchlacks ist, wobei mit dem Verfahren insbesondere die untere Grenze der Schichtdicke des Decklacks eines füllerlosen Automobillacks ermittelbar sein soll, ab der eine Delamination des Decklacks durch Lichteinwirkung während der Lebensdauer des Automobils nicht mehr auftritt.

Dies wird erfindungsgemäß mit dem im Anspruch 1 gekennzeichneten Verfahren erreicht, das durch die Unteransprüche 2 bis 5 in vorteilhafter Weise ausgestaltet wird. Die Ansprüche 6 und 7 haben bevorzugte Verwendungen des erfindungsgemäßen Verfahrens zum Gegenstand.

Wie festgestellt werden konnte, führt die Lichteinwirkung auf einen Elektrotauchlack, insbesondere einen kathodischen Elektrotauchlack (KTL) zur Zersetzung des Elektrotauchlacks unter Bildung von Zersetzungsprodukten. Erfindungsgemäß wird daher wenigstens ein Zersetzungsprodukt als Referenz-Zersetzungsprodukt ausgewählt. Das ausgewählte Referenz-Zersetzungsprodukt zeichnet sich dadurch aus, dass es sich von den übrigen Zersetzungsprodukten eindeutig unterscheiden lässt und in einer relativ großen Menge gebildet wird.

Zur Ermittlung des Referenz-Zersetzungsprodukts wird der Elektrotauchlack Licht im UV- und sichtbaren UV/VIS-Bereich ausgesetzt, also einem Licht, das beispielsweise den Wellenlängenbereich von 300 nm bis 400 nm, insbesondere von 280 nm bis 500 nm umfasst.

Der der Lichteinwirkung ausgesetzte Elektrotauchlack wird anschließend chemisch analysiert. Dazu werden die Zersetzungsprodukte chromatographisch aufgetrennt, beispielsweise durch Flüssigkeitschromatographie, insbesondere HPLC. Die chromatographisch aufgetrennten Zersetzungsprodukte werden dann anhand charakteristischer Größen erfasst, spektroskopisch, beispielsweise durch Absorptions-Spektroskopie, insbesondere UV-Spektroskopie, und/oder Massen-Spektroskopie. Das Zersetzungsprodukt, welches von den übrigen Zersetzungsprodukten z.B. chromatographisch eindeutig abtrennbar ist und einen relativ großen Peak bildet, wird dann als Referenz-Zersetzungsprodukt ausgewählt.

Als Elektrotauchlack wird vor allem ein handelsüblicher KTL verwendet. Die meisten handelsüblichen KTL werden aus vernetzten Biphenol A-Lacken gebildet die aus Bisphenol A-Prepolymeren als Hauptkomponente und meist aromatischen Vernetzungsmitteln, wie Toluendiisocyanat und 4,4'-Methylendi(phenyl)isocyanat erhalten werden. Zudem sind in handelsüblichen KTL im Allgemeinen weitere Komponenten, wie Flexibilisierungsmittel, beispielsweise ethoxyliertes Bisphenol A oder Solubilisierungsmittel, wie Polyoxypropylenamine, vorhanden.

Dabei hat sich gezeigt, dass bei den handelsüblichen KTL, wenn sie einer Lichteinwirkung im UV- und UV/VIS-Bereich ausgesetzt werden, ein Zersetzungsprodukt in relativ großer Menge erzeugt wird, das bei UV-Spektroskopie einen Peak im Bereich unterhalb von 300 nm erzeugt und ein Molekulargewicht von etwa 136 bei massenspektroskopischer Bestimmung aufweist.

Wenn das Referenz-Zersetzungsprodukt ermittelt worden ist, kann anhand der Menge oder Konzentration des Referenz-Zersetzungsprodukts in der Elektrotauchlackschicht des jeweiligen füllerlosen Automobillacks das Ausmaß der Schädigung der Elektrotauchlackschicht bestimmt werden, welche durch Lichteinwirkung hervorgerufen worden ist.

Um festzustellen, ob beispielsweise in einem Reklamationsfall die Delamination auf einer Schädigung der Elektrotauchlackschicht durch Lichteinwirkung beruht oder nicht, kann z.B. der Decklack und die Elektrotauchlackschicht abgetragen und dann durch chemische Analyse in gleicher Weise, wie oben beschrieben, ermittelt werden, ob das Referenz-Zersetzungsprodukt in der Elektrotauchlackschicht vorliegt oder nicht. Wenn das Referenz-Zersetzungsprodukt ab einer bestimmten Konzentration festgestellt wird, hat der Automobilhersteller die Delamination zu verantworten, andernfalls der Kunde.

Um die Mindestschichtdicke der Decklackschicht zu bestimmen, kann beispielsweise wie folgt vorgegangen werden:

Es werden mehrere Proben aus z.B. durch Phosphatierung oberflächenbehandeltem Blech, die mit einem füllerlosen Lack aus einer Elektrotauchlackschicht, wenigstens einer Basislack und einer Klarlackschicht gleicher Zusammensetzung und Schichtdicke versehen sind, einer UV-Strahlung mit jeweils unterschiedlicher Belichtungszeit ausgesetzt.

Jede Probe wird dann in mindestens zwei Stücke geteilt. Das eine Probestück wird z.B. mit der Gitterschnittmethode-auf Delamination überprüft, bei der nach Einritzen eines Gittermusters in die Lackschicht delaminierter Lack mit einem Haftklebestreifen vom Blech gelöst wird (EN ISO 2409:1994). Das andere Probestück wird zur Analyse der Konzentration des Referenz-Zersetzungsproduktes der Elektrotauchlackschicht verwendet.

Dazu kann der Lack, einschließlich der Elektrotauchlackschicht, durch Auseinanderziehen des beispielsweise streifenförmigen Probestücks vom Blech gelöst werden. Der erhaltene freie Lackfilm wird zerkleinert und dann beispielsweise in einem polaren Lösungsmittel, wie Tetrahydrofuran, gelöst. Die Lösung wird z.B. mittels HPLC chromatographiert und das Eluat z.B. einer UV-Spektroskopie und Massenspektroskopie zur Bestimmung der Menge des Referenz-Zersetzungsprodukts unterworfen, beispielsweise anhand der Fläche des Peaks im UV-Spektrum bei Erfassen der Verbindung mit einem Molekulargewicht von 136 mit dem Massenspektrometer.

Damit kann die maximale Konzentration des Referenz-Zersetzungsprodukts ermittelt werden, bis zu der keine spürbare Delamination feststellbar ist.

Aufgrund der erhaltenen Ergebnisse kann z.B. eine Regressionskurve gefittet werden, mit der die Lebensdauer der jeweiligen Lackierung errechnet werden kann.

Dabei werden vorzugsweise Proben verwendet, die mit einem Klarlack ohne Lichtschutzmittel und einem unpigmentierten Basislack lackiert sind.

Das nachstehende Beispiel dient der weiteren Erläuterung der Erfindung:

Um die Lebensdauer eines füllerlosen Automobillacks zu bestimmen, werden aus einem phosphatierten, mit einem handelsüblichen KTL mit einer Schichtdicke von 20 μm bis 24 μm, einem unpigmentierten Basislack mit einer Schichtdicke von 5 μm bis 10 μm und einem Klarlack mit einer Schichtdicke von 35 μm bis 45 μm versehenen Stahlblech acht rechteckige, gleich große Probestücke gebildet.

Jedes Probestück wird in drei gleich große Streifen geschnitten, die jeweils mit einer UV-Lampe mit gleicher Intensität ca. 24, 48, 72, 96, 120, 180, 210 und 235 Stunden belichtet werden.

Mit dem mittleren Streifen jeder Probe wird die Haftung des Lacks nach der Gitterschnittmethode bestimmt. Je nach der Menge des nach der Gitterschnittmethode mit dem Haftklebestreifen von dem mittleren Streifen gelösten Lacks wird die Delamination bewertet, und zwar mit den Noten 0 bis 5, wobei die Note 0 keine Delamination und die Note 5 starke Delamination bedeutet.

Der linke und rechte Streifen jeder Probe wird zur Analyse des Referenz-Zersetzungsprodukts verwendet, welches durch UV-Spektroskopie und zugleich Massenspektroskopie detektiert wird, und eine aromatische Verbindung ist, die einen Absorptionspeak unterhalb 300 nm mit einem Molekulargewicht von 136 aufweist.

Dazu wird die Lackschicht, einschließlich der KTL-Schicht von dem Blech gelöst, indem der Streifen der Länge nach gedehnt wird. Der freie Lackfilm der beiden Streifen wird zerkleinert und mit einem Lösemittelgemisch aus Acetonitril (ACN) und Ethylacetat 3 h extrahiert. Das Lösemittel wird mit einem Turbovap verdampft, die Restfüllmenge mit THF aufgenommen und dann auf 1 ml reduziert.

Der auf 1 ml reduzierte THF-Extrakt wird mittels HPLC mit einem Methanol/Wassergemisch als Fließmittel mit einem Gradienten von 90,0 Vol.-% Wasser und 10 Vol.-% Methanol am Start bis 100,0 Vol.-% Methanol chromatographiert und das Eluat mittels eines Dioden-Array-UV-Detektors (DAD) und einem Massenspektrometer detektiert.

Die Fläche des UV-Absorptionspeaks, der bei Detektion des Zersetzungsprodukts mit dem Molekulargewicht von 136 auftritt, wird gemessen und stellt die relative Konzentration des gebildeten Referenz-Zersetzungsprodukts dar, das bei der jeweiligen Belichtungszeit gebildet worden ist.

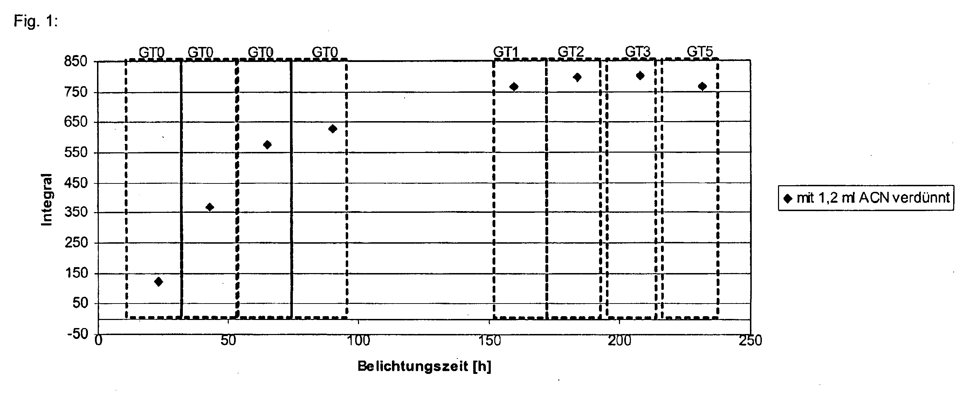

Die erhaltenen Werte sind in dem als Figur 1 beigefügten Diagramm dargestellt. Dabei ist in der Abszisse die Belichtungszeit in Stunden und in der Ordinate das Integral, also die Fläche des Peaks und damit die relative Konzentration des Referenz-Zersetzungsprodukts mit der Masse 136 in dem jeweiligen Probestück dargestellt. GTO, GT1, GT2, usw., bedeuten die Bewertung der mit der Gitterschnittmethode bestimmten Delamination mit den Noten 0, 1, 2, usw., des jeweiligen Probestücks.

Da die Noten 0 und 1, also GTO und GT1 akzeptierbar sind, führt eine Konzentration von etwa 770 des Referenz-Zersetzungsprodukts, welche nach einer Belichtungszeit von ca. 160 h auftritt, noch nicht zu einer Delamination.

Die Konzentration, bei der das grenzwertige Gitterschichtergebnis GT 1 erzielt wird, wird als Grenzkonzentration für das Referenz-Zersetzungsprodukt bezeichnet.

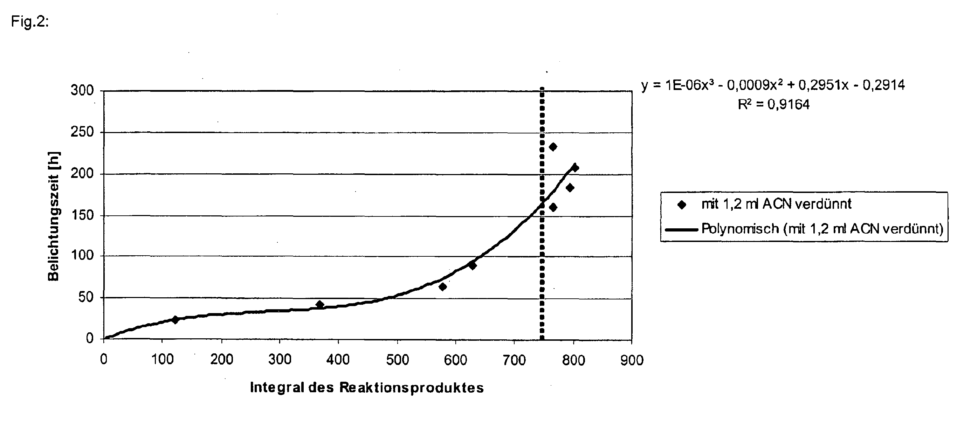

In dem Diagramm nach Figur 2 sind die Achsen für die Belichtungszeit und das Integral des Reaktionsproduktes vertauscht und durch die Punkte einer Regressionskurve gefittet, wobei die Gleichung für die Regressionskurve in Figur 2 rechts oben dargestellt ist.

Wird nun das Integral des Referenz-Zersetzungsproduktes einer Probe eines Automobillacks ermittelt, der mit einer pigmentierten Basislackschicht und mit einer mit Lichtschutzmitteln versetzten Klarlackschicht hergestellt worden und UV-Licht der gleichen Intensität ausgesetzt worden ist wie die Proben, mit denen die Diagramme nach Figur 1 und 2 erstellt worden sind, so kann der Wert dieses Integrals in die Funktion gemäß Figur 2 eingegeben werden. Das Ergebnis des Grenzwertes wird durch das ermittelte Ergebnis dividiert und mit 1 gemäß der nachstehenden Formel subtrahiert:

$$(F(Grenzwert)/F(Ermittelt))-1 = Lebensdauerfaktor.$$

Man erhält so einen Faktor, welcher, multipliziert mit der bisherigen Strahlungsexpositionszeit und dem Verhältnis der UV-Strahlungsintensität, mit der die Kurven nach Figur 1 und 2 erstellt worden sind und der der pigmentierte Automobilprobelack ausgesetzt worden ist, zu der UV-Strahlung, die der Automobillack durch das Sonnenlicht ausgesetzt ist, die noch zu erwartende Lebensdauer ergibt.

D.h., wenn nach einer Belichtungszeit von 500 h das Integral des Referenz-Zersetzungsprodukts 200 beträgt, ist der Lebensdauerfaktor dieses Automobillacks mit F(Grenzwert) von 160 h und mit F(Ermittelt) von 40 h mit (160:40)-1=3.

D.h., wenn das Verhältnis der UV-Strahlungsintensität,-der-dieser pigmentierte Lack 500 h ausgesetzt worden ist, zu der Intensität der UV-Strahlung, der der Lack durch das Sonnenlicht ausgesetzt wird, z.B. 50 beträgt, weist dieser pigmentierte Automobillack eine Lebensdauer von 3 x 500 x 50 = 75000 h und damit bei einer täglichen durchschnittlichen Sonnenscheindauer von 12 h von ca. 17 Jahren(75000/12) auf.

Damit kann nach kurzer Testzeit durch Extrapolation auf die Lebensdauer einer füllerlosen Automobillackierung geschlossen werden.

**Patentansprüche**

1. Verfahren zur Bestimmung der zur Delamination führenden Schädigung der Elektrotauchlackschicht eines füllerlosen Automobillacks durch Lichteinwirkung, **dadurch gekennzeichnet, dass** für den Elektrotauchlack ein bei Lichteinwirkung gebildetes Referenz-Zersetzungsprodukt ermittelt und anhand der Konzentration des Referenz-Zersetzungsprodukts des Elektrotauchlacks des füllerlosen Automobillacks das Ausmaß der durch die Lichteinwirkung hervorgerufenen Schädigung der Elektrotauchlackschicht bestimmt wird, wobei die Konzentration des Referenz-Zersetzungsprodukts in dem füllerlosen Automobillack durch chemische Analyse bestimmt wird, wozu das Referenz-Zersetzungsprodukt chromatographisch abgetrennt und die Konzentration des chromatographisch abgetrennten Referenz-Zersetzungsprodukts durch Spektroskopie bestimmt wird.

2. Verfahren nach Anspruch 1, **dadurch gekennzeichnet, dass** die chromatographische Abtrennung durch Hochleistungs-Flüssigkeits-Chromatographie (HPLC) erfolgt.

3. Verfahren nach Anspruch 1, **dadurch gekennzeichnet, dass** die Bestimmung der Konzentration des Referenz-Zersetzungsprodukts durch simultane AbsorptionsSpektroskopie und Massenspektroskopie im Laufe der chromatographischen Abtrennung erfolgt.

4.  Verfahren nach Anspruch 1, **dadurch gekennzeichnet, dass** die Elektrotauchlackschicht, deren Schädigung durch Lichteinwirkung bestimmt wird, eine kathodische Elektrotauchlackschicht ist.

5.  Verfahren nach Anspruch 4, **dadurch gekennzeichnet, dass** der kathodische Elektrotauchlack ein mit aromatischen Vernetzungsmitteln vernetzter Bisphenol A-Lack ist.

6.  Verwendung des Verfahrens nach einem der vorstehenden Ansprüche zur Bestimmung der Mindestschichtdicke der Basislack- und Klarlackschicht eines füllerlosen Automobillacks.

7.  Verwendung des Verfahrens nach einem der Ansprüche 1 bis 5 zum Nachweis der durch die Lichteinwirkung hervorgerufenen Delamination eines füllerlosen Automobillacks.

## Claims

1.  A method of determining the damage, leading to delamination, of an electrocoated layer of filler-free car paint by action of light, **characterised in that** a reference decomposition product formed by action of light is determined for the electrocoating paint and the extent of damage of the electrocoating layer caused by light is determined via the concentration of the reference decomposition product of the coat of the filler-free car paint, wherein the concentration of the reference decomposition product in the filler-free car paint is determined by chemical analysis, to which end the reference decomposition product is separated by chromatography and the concentration of the chromatographically separated reference decomposition product is determined by spectroscopy.

2.  A method according to claim 1, **characterised in that** chromatographic separation is obtained by high-performance liquid chromatography (HPLC).

3.  A method according to claim 1, **characterised in that** the concentration of the reference decomposition product is obtained by absorption spectroscopy and simultaneous mass spectroscopy during the chromatographic separation process.

4.  A method according to claim 1, **characterised in that** the electrocoating layer, damage to which by light is determined, is a cathode electrocoating layer.

5.  A method according to claim 4, **characterised in that** the cathodic electrocoating paint is a bisphenol A-paint cross-linked by aromatic crosslinking agents.

6.  Use of the method according to any of the preceding claims for determining the minimum thickness of the base coat and the clear coat of a filler-free car paint.

7.  Use of the method according to any of claims 1 to 5 for detecting delamination of a filler-free car paint caused by action of light.

## Revendications

1.  Procédé permettant de déterminer la détérioration provoquant une délamination de la couche de vernis d'un véhicule automobile obtenue par trempage électrolytique sans charge, sous l'action de la lumière,
    **caractérisé en ce que**
    pour la couche de vernis obtenue par trempage électrolytique on détermine un produit de décomposition de référence formé sous l'action de la lumière, et à partir de la concentration de ce produit de décomposition de référence du vernis du véhicule automobile obtenu par trempage électrolytique sans charge on détermine dans quelle mesure la couche de vernis obtenue par trempage électrolytique a été détériorée sous l'action de la lumière, la concentration du produit de décomposition de référence étant déterminée par analyse chimique, dans le vernis du véhicule automobile sans charge en séparant le produit de décomposition de référence par chromatographie et en déterminant la concentration de ce produit de décomposition de référence séparé par chromatographie par spectroscopie.

2. Procédé conforme à la revendication 1,
   **caractérisé en ce que**
   la séparation chromatographique est effectuée par chromatographie en phase liquide à haute puissance (HPLC).

3. Procédé conforme à la revendication 1,
   **caractérisé en ce que**
   la détermination de la concentration du produit de décomposition de référence est effectuée par spectroscopie d'absorption et spectroscopie de masse simultanées au cours de la séparation par chromatographie.

4. Procédé conforme à la revendication 1,
   **caractérisé en ce que**
   la couche de vernis obtenue par trempage électrolytique dont on doit déterminer la détérioration sous l'action de la lumière est une couche de vernis obtenue par trempage électrolytique cathodique.

5. Procédé conforme à la revendication 4,
   **caractérisé en ce que**
   le vernis obtenu par trempage électrolytique cathodique est un vernis au bisphénol A réticulé par des agents de réticulation aromatiques.

6. Utilisation du procédé conforme à l'une des revendications précédentes, pour déterminer l'épaisseur de couches minimum de la couche de vernis de base ou de la couche de vernis transparente d'un vernis de véhicule automobile sans charge.

7. Utilisation du procédé conforme à l'une des revendications 1 à 5, pour prouver la délamination d'un vernis de véhicule automobile sans charge entrainée par l'action de la lumière.

Fig. 1:

Fig.2:

$y = 1E\text{-}06x^3 - 0{,}0009x^2 + 0{,}2951x - 0{,}2914$

$R^2 = 0{,}9164$

◆ mit 1,2 ml ACN verdünnt

—— Polynomisch (mit 1,2 ml ACN verdünnt)

Belichtungszeit [h]

Integral des Reaktionsproduktes

EP 1 870 694 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 2004155189 A1